# EUROPÄISCHE PATENTSCHRIFT

(11) **EP 1 795 322 B1**
(45) Veröffentlichungstag und Bekanntmachung des Hinweises auf die Patenterteilung: **02.01.2008**
(21) Anmeldenummer: 06024478.7
(22) Anmeldetag: 25.11.2006
(51) Int. Cl.: B29C 33/62, B01F 17/00

(54) **Trennmittel und seine Verwendung bei der Herstellung von Polyurethan-Formkörpern**
Releasing agent and its use for producing moulded polyurethane articles
Agent de démoulage et son utilisation pour la fabrication de polyuréthane moulé

(30) Priorität: 10.12.2005 DE 102005059142
(43) Veröffentlichungstag der Anmeldung: 13.06.2007
(73) Patentinhaber: Evonik Goldschmidt GmbH, 45127 Essen (DE)
(72) Erfinder: Althoff, Ralf, 45721 Haltern (DE); Faure, Philippe, 91400 Orsay (FR); Henning, Torsten, Dr., 19057 Schwerin (DE)

(56) Entgegenhaltungen:
- EP-A2- 0 846 539
- US-A- 4 131 662

## Beschreibung

Die Erfindung betrifft Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähige Werkstoffe wie Metalle, eine starke Adhäsion zeigen. Daher benötigt man bei der Entformung der Polyurethan-Formkörper Trennmittel, die auf die mit Polyurethanen und/oder der Polyurethanreaktionsmischung in Berührung kommenden Formwandungen, aufgebracht werden.

Solche Trennmittel bestehen aus Dispersionen oder Emulsionen von Wachsen, Seifen, Ölen und/oder Siliconen in Lösungsmitteln wie Kohlenwasserstoffen oder Wasser. Nach Aufbringen des Trennmittels auf die Form verdampft das Lösungsmittel und die nichtflüchtigen trennaktiven Substanzen bilden einen dünnen Trennfilm, damit der Polyurethan-Formkörper nach der Herstellung leicht aus der Form entnommen werden kann.

Neben der eigentlich benötigten Trennwirkung übernimmt das Trennmittel noch weitere Funktionen, so beeinflusst es auch sehr stark die Oberfläche des Polyurethan-Formkörpers, die feinporig bzw. glatt und gleichmäßig sein soll; unter anderem auch, um eine gute Beziehbarkeit der fertigen Formteile mit Stoffen oder Leder zu gewährleisten.

Im Zuge immer stärkerer Optimierung der Produktionsgeschwindigkeiten in der Automobilzuliefererindustrie ist gerade die oben beschriebene Eigenschaft der Beziehbarkeit des Polyurethan-Formkörpers zu einem wichtigen Qualitätsmerkmal geworden. Trennmittel nach dem heutigen Stand der Technik liefern zwar durch Verwendung geeigneter Polyethersiloxan-Schaumstabilisatoren und Polyurethankatalysatoren Polyurethan-Formkörper mit glatter Oberfläche, diese zeigen jedoch trotzdem einen erheblichen Widerstand beim Beziehen mit Stoff oder Leder.

Eine Möglichkeit, Reibungswiderstände zu reduzieren, ist die Verwendung von festen Gleitmitteln wie Schichtsilicate oder Talkum.

Es sind Versuche bekannt, Talkumpulver als externes Trennmittel auf die Form aufzustäuben. Die Verwendung von Talkum in Pulverform ist jedoch nicht für den produktionsmäßigen Einsatz geeignet. Es wird kein einheitlicher Trennfilm in der Form erzeugt, die Arbeitsumgebung wird stark durch Pulverstäube verschmutzt und es ist nicht möglich, flüssige Additive einzuformulieren.

Versucht man, Talkum in klassische, lösungsmittelbasierende Trennmittel einzuarbeiten, sinkt das feste Talkum sofort nach dem Einrühren innerhalb weniger' Minuten zu Boden, so dass eine Applikation per Sprühauftrag des Trennmittels nicht mehr möglich ist. Auch ein Aufrühren der Mischung kurz vor dem Versprühen ist nicht möglich, da die instabile Mischung sich bereits während des Transports durch die dünnen Rohrleitungen bis zur Düse separiert und die Leitungen mit Talkum verstopft.

US-4 131 662 beschreibt eine Suspension von Talkum, stabilisiert in einer wässrigen Emulsion mit niedermolekularem organischen Material (Molekulargewicht 200 oder niedriger), bevorzugt Toluol, als formtrennenden Wirkstoff zusammen mit einem organischen Lösungsmittel, das mit dem niedermolekularen organischen Material mischbar ist, bevorzugt Dichlormethan.

Das in dieser Formulierung enthaltene Wasser verflüchtigt sich aber bei den üblichen Formtemperaturen von 45 bis 80 °C, bevorzugt 50 bis 75 °C, nicht vollständig und es bleibt immer ein dünner Wasserfilm in der Form zurück. Mit diesem Wasser gehen die Isocyanatverbindungen des Polyurethansystems Reaktionen ein, die zu sehr harten Polyharnstoffverbindungen führen. Dadurch werden die Formoberflächen gestört, erhalten einen sogenannten Aufbau und müssen aufwendig gereinigt werden.

Aufgabe der vorliegenden Erfindung war es daher, Formtrennmittel zu finden, die stabil sind, die eine gute Trennwirkung zeigen und auf die Oberflächen der Polyurethan-Formkörper günstig einwirken. Die Oberfläche soll feinporig, gleichmäßig, glatt und mit wenig Kraftaufwand schnell beziehbar sein. Schließlich soll das Trennmittel keinen Polyharnstoffaufbau auf den Formoberflächen hinterlassen.

Überraschenderweise wurde nun gefunden, dass eine Dispersion klassischer trennaktiver Substanzen wie Wachse, Seifen, Öle und/oder Silicone in organischen Lösungsmitteln in Kombination mit Talkum zusammen mit Verdickungsmittel diese Aufgabe erfüllt.

Gegenstand der Erfindung sind daher Trennmittel-Dispersionen für die Herstellung von Polyurethan-Formkörpern enthaltend im Wesentlichen
A) mindestens ein trennaktives Mittel aus der Gruppe der Seifen, Öle, Wachse und Silicone,
B) Talkum,
C) ein Verdickungsmittel und
D) organisches Lösungsmittel.

Bevorzugt bestehen die Dispersionen aus:
A) 0,5 bis 40 Gew.-% mindestens eines trennaktiven Mittels aus der Gruppe Seifen, Öle, Wachse und Silicone,
B) 0,1 bis 15 Gew.-% Talkum,
C) 0,05 bis 10 Gew.-% Verdickungsmittel,
D) 0,1 bis 10 Gew.-% Hilfs- und Zusatzmittel,
E) ad 100 Gew.-% Lösungsmittel.

Besonders bevorzugt bestehen die Dispersionen aus:
A) 0,5 bis 40 Gew.-% mindestens eines trennaktiven Mittels aus der Gruppe Seifen, Öle, Wachse und Silicone,
B) 0,1 bis 15 Gew.-% Talkum,
C) 0,05 bis 10 Gew.-% Kieselsäure,
D) 0,1 bis 5 Gew.-% Katalysatoren,
E) 0,1 bis 5 Gew.-% Schaumstabilisatoren,
F) ad 100 Gew.-% Lösungsmittel.

Ein weiterer Gegenstand der Erfindung ist die Verwendung dieser Trennmittel bei der Herstellung von Polyurethan-Formkörpern.

Ein weiterer Gegenstand der Erfindung ist die Verwendung der Trennmittel-Dispersion zur Verbesserung der Beziehbarkeit der mit Hilfe der beschriebenen Trennmittel hergestellten Polyurethan-Formkörper mit Stoffen, Textilien, Vliesen, Leder oder anderen Bezugsmaterialien für Autositze, Polstermöbel oder Matrazen.

Als Talkum werden anorganische Mineralien aus der Familie der Schichtsilicate, auch Phyllosilicate, bezeichnet, die hauptsächlich aus Magnesiumsilicat bestehen und verschiedene Beimischungen wie Chlorit oder andere Begleitmineralien enthalten.

Auch Glimmer (Mica), also Schichtsilicate, in die große Kationen wie K⁺, Na⁺ oder Ca²⁺ eingebaut sind, kommen in Frage.

Bevorzugt wird Talkum mit einer Zusammensetzung von 35 bis 70 Gew.-% SiO₂, 5 bis 40 Gew.-% MgO, 1 bis 20 Gew. -% Al₂O₃ und 1 bis 5 Gew.-% Fe₂O₃, verwendet. Besonders bevorzugt wird lamellares Talkum mit einer Zusammensetzung von 40 bis 50 Gew.-% SiO₂, 25 bis 35 Gew.-% MgO, 7 bis 12 Gew.-% Al₂O₃, 1,5 bis 2,5 Gew.-% Fe₂O₃ und 1 bis 2 Gew.-% CaO verwendet.

Geeignete Talkum-Produkte werden beispielsweise vertrieben unter den Handelsnamen Luzenac®, Mistron®, French Velvet®, Ultrapure Talc®.

Das Talkum wird zu einem großen Teil bei der Entformung des Polyurethan-Formkörpers auf diesen übertragen und führt zu einer sehr glatten, hervorragend beziehbaren Oberfläche.

Als Kieselsäure wird bevorzugt pyrogene Kieselsäure mit SiO₂-Gehalt, bezogen auf bei 1.000 °C für 2 Stunden geglühte Substanz, von > 99 % eingesetzt. Die bevorzugte Teilchengröße der Kieselsäure ist < 40 Mikrometer. Bevorzugte spezifische Oberfläche (BET) ist > als 50 m²/g, besonders bevorzugt > als 100 m²/g.

Geeignete Kieselsäure wird beispielsweise vertrieben unter den Handelsnamen Aerosil®, etwa Aerosil® 200, Aerosil® R 805, Aerosil® R 972 oder Wacker HDK®, etwa Wacker HDK® H 15 oder Neosil®.

Die Kieselsäure erzeugt eine Fließgrenze in der Lösungsmittelmatrix und stabilisiert so das feste Talkumpulver, verhindert ein Absinken und ermöglicht eine Sprühapplikation des Trennmittels.

Als klassische trennaktive Substanzen können erfindungsgemäß beispielsweise verwendet werden:
Wachse, d. h. flüssige, feste, natürliche oder synthetische Wachse, auch oxidiert und/oder teilverseift,
   Ester von Carbonsäuren mit Alkoholen oder Fettalkoholen,
   Metallseifen, wie Alkali- oder Erdalkalimetallsalze von Fettsäuren,
   Öle, wie bei Raumtemperatur flüssige oder zähfließende Kohlenwasserstoffe, gegebenenfalls aber nicht bevorzugt, unter Mitverwendung ungesättigter oligomere und/oder polymerer Kohlenwasserstoffe,
   Silicone, wie Polydimethylsiloxane, gegebenenfalls substituiert mit aliphatischen oder aromatischen Kolenwasserstoffresten.

Typische trennwirksame Wachse sind beispielsweise aufgeführt in den Firmenschriften "Waxes by Clariant, production, charcteristics and applications" Clariant Mai 2003 und "Formtrennmittel mit Vestowax®" Degussa Februar 2001.

Als übliche Hilfs- und Zusatzstoffe können ein oder mehrere Verbindungen ausgesucht aus der Gruppe
I) Katalysatoren:
   solche, die typischerweise für die Polyurethanreaktion verwendet werden, beispielsweise Lewis Säuren wie Zinnverbindungen oder Lewis Basen wie tertiäre Amine;
II) Schaumstabilisatoren:
   Polysiloxan-Polyether-Copolymerisate
eingesetzt werden.

Als Lösungsmittel können bevorzugt Lösungsmittel eingesetzt werden, die frei von FCKW (Fluor-Chlor-Kohlenwasserstoffen) sind. Bevorzugt werden Kohlenwasserstoffe mit Siedebereichen von 25 bis 280 °C, bevorzugt 80 bis 200 °C, bevorzugt mit Flammpunkten > 22 °C, besonders bevorzugt > 55 °C eingesetzt.

Beispiele für geeignete Lösungsmittel sind Spezialbenzin 100/140, Shellsol® D 40, Exxsol® D 40; als Isoparaffin wie etwa Mischungen aus Isoundecan und Isododecan oder als Testbenzin (White Spirits) zum Beispiel Kristallöl K 30.

Die erfindungsgemäßen Dispersionen können nach den im Stand der Technik bekannten Verfahren hergestellt werden. Bevorzugt geht man so vor, dass die trennaktiven Substanzen in geschmolzener Form vorgelegt werden, scherkraftreich ein Teil des Lösungsmittels eingetragen wird, dann das restliche Lösungsmittel zusammen mit Talkum, Kieselsäure und den weiteren Komponenten scherkraftarm zugegeben wird. Ganz besonders bevorzugt wird das restliche Lösungsmittel zunächst mit der Kieselsäure als Gel angedickt und danach mit dem Talkum scherkraftarm zugegeben.

Die Erfindung betrifft weiter die Verwendung der beschriebenen Trennmittel bei der Herstellung von Polyurethan-Formkörpern.

Klassischerweise wird die Form auf die gewünschte Formtemperatur von 45 bis 80 °C, bevorzugt 50 bis 75 °C, gebracht, mit Trennmittel eingesprüht, eine gewisse Zeit gewartet, bis die größte Menge Lösungsmittel verdampft ist und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit die Form geöffnet und das Formteil entformt.

Die Erfindung betrifft weiter das Beziehen der mit Hilfe der beschriebenen Trennmittel wie beschrieben hergestellten Polyurethan-Formkörper mit Stoffen, Textilien, Vliesen, Leder oder anderen Bezugsmaterialien etwa für Autositze, Polstermöbel oder Matrazen.

Besonders geeignet ist das beschriebene Trennmittel auch für Formkörper aus viskoelastischen Polyurethanschäumen, deren typischerweise klebrige Oberfläche durch das Schichtsilikat trockener und besser handhabbar wird.

### Beispiele:

Liste der eingesetzten Substanzen:
- Mikrowachs = handelsübliche Wachse mit einer Erstarrungstemperatur von 50 bis 90 °C,
- Polyethylenwachs = handelsübliche Wachse mit einer Erstarrungstemperatur von 50 bis 90 °C,
- Kohlenwasserstoff = handelsübliche Benzinfraktionen mit Siedebereichen von 80 bis 200 °C,
- Luzenac® 2 = lamellares Talkum mit SiO₂ 46,0 Gew.-%, MgO 30,5 Gew.-%, Al₂O₃ 9,8 Gew.-%, Fe₂O₃ 2,1 Gew.-%, CaO 1,4 Gew.-%, Hersteller: Luzenac,
- Aerosil® R 972 = Pyrogene Kieselsäure, mit SiO₂-Gehalt, bezogen auf bei 1.000 °C für 2 Stunden geglühte Substanz, > 99,7 %, Teilchengröße max. 0,06 % > 40 Mikrometer, spezifische Oberfläche (BET) 100 m²/g, Hersteller: Degussa
- Kosmos® 19 = Dibutylzinndilaurat (DBTL), Hersteller: Degussa
- DC® 190 = Polyethersiloxan, Hersteller: Air Products,
- Desmophen® PU 21IK01 = Polyetherpolyol, Hersteller: Bayer,
- Tegoamin® TA 33, Hersteller: Degussa,
- Tegoamin® AS-1, Hersteller: Degussa,
- Tegostab® EP-K-38 = organomodifiziertes Siloxan, Hersteller: Degussa,
- Suprasec® 2412 = Diphenylmethan-4,4'-diisocyanat, Hersteller: Huntsman.

### Beispiel 1:

2,5 Gew.-% Polyethylenwachs (Erstarrungspunkt 60 °C) und 2,5 Gew.-% Mikrowachs (Erstarrungspunkt 70 °C) werden aufgeschmolzen und mit 45 Gew.-% Kohlenwasserstoff (Flammpunkt 23 °C) versetzt. 46,3 Gew.-% Kohlenwasserstoff (Flammpunkt 23 °C) werden mit 0,2 Gew.-% Aerosil® R 972 verdickt und mit 2 Gew.-% Luzenac® 2 sowie 0,5 Gew.-% Kosmos® 19 und 1 Gew.-% DC® 190 versetzt und zu der Wachsdispersion zugegeben.

### Beispiel 2:

2,5 Gew.-% Polyethylenwachs (Erstarrungspunkt 60 °C) und 2,5 Gew.-% Mikrowachs (Erstarrungspunkt 70 °C) werden aufgeschmolzen und mit 45 Gew.-% Kohlenwasserstoff (Flammpunkt 56 °C) versetzt. 44,25 Gew.-% Kohlenwasserstoff (Flammpunkt 56 °C) werden mit 0,5 Gew.-% Aerosil® R 972 verdickt und mit 3,5 Gew.-% Luzenac® 2 sowie 0,5 Gew.-% Kosmos® 19 und 1 Gew.-% DC® 190 versetzt und zu der Wachsdispersion zugegeben.

### Beispiel 3:

2 Gew.-% Polyethylenwachs (Erstarrungspunkt 60 °C) und 2 Gew.-% Mikrowachs (Erstarrungspunkt 70 °C) werden aufgeschmolzen und mit 45 Gew.-% Kohlenwasserstoff (Flammpunkt 56 °C) versetzt. 40,4 Gew.-% Kohlenwasserstoff (Flammpunkt 56 °C) werden mit 1,5 Gew.-% Aerosil® R 972 verdickt und mit 8 Gew.-% Luzenac® 2 sowie 0,3 Gew.-% Kosmos® 19 und 0,8 Gew.-% DC® 190 versetzt und zu der Wachsdispersion zugegeben.

### Vergleichsbeispiel A:

### klassisches Trennmittel

2,5 Gew.-% Polyethylenwachs (Erstarrungspunkt 60 °C) und 2,5 Gew.-% Mikrowachs (Erstarrungspunkt 70 °C) werden aufgeschmolzen und mit 45 Gew.-% Kohlenwasserstoff (Flammpunkt 56 °C) versetzt. 48,5 Gew.-% Kohlenwasserstoff (Flammpunkt 56 °C) werden mit 0,5 Gew.-% Kosmos® 19 und 1 Gew.-% DC® 190 versetzt und zu der Wachsdispersion zugegeben.

### Trennmittelversuche:

Die Trennmittel wurden mittels einer 0,5 mm Düse in praxisnahen Mengen von 20 g/m² auf Testmetallplatten aufgesprüht und ein schäumbares Polyurethansystem'.bestehend aus 100 Teilen Desmophen® PU 21IK01, 3,5 Teilen Wasser, 0,4 Teilen Tegoamin® TA 33, 0,25 Teilen Tegoamin® AS-1, 0,7 Teilen Diethanolamin, 0,5 Teilen Tegostab® EP-K-38, 0,2 Teilen Essigsäure (60 % in Wasser), 63,5 Teilen Suprasec® 2412 auf diese Platten in einer Kastenform bei 55 °C aufgeschäumt.
Nach dem Aushärten (10 Minuten) wurden die Metallplatten vom Schaum abgezogen und dann die Schaumoberfläche beurteilt. Die Beziehfähigkeit wird als Gleitreibung mittels eines an einer Federkraftwaage angebrachten Gewichtes (100 g, Fläche 24 cm²) gemessen, das mit Textilstoff bezogen ist und über den Schaum gezogen wird.

### Bewertung der Trennversuche:

| Trennmittel | Beurteilung der Schaumoberfläche | Max. Kraft zum Ziehen des 100 g Gewichts mit Fläche 24 cm² über die Schaumoberfläche [kg] |
|---|---|---|
| 1 | leicht geschlossen, trocken | 8 |
| 2 | geschlossen, trocken | 6 |
| 3 | geschlossen, trocken | 5 |
| A | feinporig offen, trocken | 12 |

## Patentansprüche

1. Trennmittel-Dispersionen für die Herstellung von Polyurethan-Formkörpern enthaltend im Wesentlichen
A) mindestens ein trennaktives Mittel aus der Gruppe der Seifen, Öle, Wachse und Silicone,
B) Talkum,
C) ein Verdickungsmittel und
D) organisches Lösungsmittel.

2. Dispersionen nach Anspruch 1, bestehend aus
A) 0,5 bis 40 Gew.-% mindestens eines trennaktiven Mittels aus der Gruppe Seifen, Öle, Wachse und Silicone,
B) 0,1 bis 15 Gew.-% Talkum,
C) 0,05 bis 10 Gew.-% Verdickungsmittel,
D) 0,1 bis 10 Gew.-% Hilfs- und Zusatzmittel,
E) ad 100 Gew.-% Lösungsmittel.

3. Dispersionen nach Anspruch 1, bestehend aus
A) 0,5 bis 40 Gew.-% mindestens eines trennaktiven Mittels aus der Gruppe Seifen, Öle, Wachse und Silicone,
B) 0,1 bis 15 Gew.-% Talkum,
C) 0,05 bis 10 Gew.-% Kieselsäure,
D) 0,1 bis 5 Gew.-% Katalysatoren,
E) 0,1 bis 5 Gew.-% Schaumstabilisatoren,
F) ad 100 Gew.-% Lösungsmittel.

4. Dispersionen gemäß mindestens einem der Ansprüche 1 bis 3, **dadurch gekennzeichnet, dass** als Talkum B) anorganische Mineralien aus der Familie der Schichtsilicate verwendet werden.

5. Dispersionen gemäß mindestens einem der Ansprüche 1 bis 4, **dadurch gekennzeichnet, dass** als Talkum B) ein Talkum mit einer Zusammensetzung von 35 bis 70 Gew.-% SiO₂, 5 bis 40 Gew.-% MgO, 5 bis 20 Gew.-% Al₂O₃ und 1 bis 5 Gew.-% Fe₂O₃ verwendet wird.

6. Dispersionen gemäß Anspruch 3, **dadurch gekennzeichnet, dass** als Kieselsäure C) pyrogene Kieselsäure mit SiO₂-Gehalt, bezogen auf bei 1.000 °C für 2 Stunden geglühte Substanz, von > 99 % verwendet wird.

7. Verwendung der Trennmittel-Dispersionen gemäß den Ansprüchen 1 bis 6 zur Herstellung von Polyurethan-Formkörpern.

8. Verwendung der Trennmittel-Dispersionen gemäß den Ansprüchen 1 bis 6 zur Verbesserung der Beziehbarkeit von damit hergestellten Polyurethan-Formkörpern.

## Claims

1. Release agent dispersions for the production of polyurethane moldings, substantially containing
A) at least one agent having release activity, from the group consisting of soaps, oils, waxes and silicones,
B) talc,
C) a thickener and
D) organic solvent.

2. Dispersions according to Claim 1, consisting of
A) from 0.5 to 40% by weight of at least one agent having release activity, selected from the group consisting of soaps, oils, waxes and silicones,
B) from 0.1 to 15% by weight of talc,
C) from 0.05 to 10% by weight of thickeners,
D) from 0.1 to 10% by weight of auxiliaries and additives,
E) solvent to 100% by weight.

3. Dispersions according to Claim 1, consisting of
A) from 0.5 to 40% by weight of at least one agent having release activity, selected from the group consisting of soaps, oils, waxes and silicones,
B) from 0.1 to 15% by weight of talc,
C) from 0.05 to 10% by weight of silica,
D) from 0.1 to 5% by weight of catalysts,
E) from 0.1 to 5% by weight of foam stabilizers,
F) solvent to 100% by weight.

4. Dispersions according to at least one of Claims 1 to 3, **characterized in that** inorganic minerals from the family consisting of the layered silicates are used as talc B).

5. Dispersions according to at least one of Claims 1 to 4, **characterized in that** a talc having a composition of from 35 to 70% by weight of SiO₂, from 5 to 40% by weight of MgO, from 5 to 20% by weight of Al₂O₃ and from 1 to 5% by weight of Fe₂O₃ is used as talc B).

6. Dispersions according to Claim 3, **characterized in that** the silica C) used is pyrogenic silica having an SiO₂ content, based on substance ignited at 1000°C for 2 hours, of > 99%.

7. Use of the release agent dispersions according to any of Claims 1 to 6 for the production of polyurethane moldings.

8. Use of the release agent dispersions according to any of Claims 1 to 6 for improving the coverability of polyurethane moldings produced therewith.

## Revendications

1. Dispersions d'agent de démoulage pour la réalisation de corps façonnés en polyuréthane, contenant essentiellement
A) au moins un agent actif en démoulage, du groupe formé par les savons, les huiles, les cires et les silicones,
B) du talc
C) un épaississant et
D) un solvant organique.

2. Dispersions selon la revendication 1, constituées par
A) 0,5 à 40% en poids d'au moins un agent actif en démoulage du groupe formé par les savons, les huiles, les cires et les silicones,
B) 0,1 à 15% en poids de talc,
C) 0,05 à 10% en poids d'épaississant,
D) 0,1 à 10% en poids d'adjuvants et d'additifs,
E) ad 100% en poids de solvant.

3. Dispersions selon la revendication 1, constituées par
A) 0,5 à 40% en poids d'au moins un agent actif en démoulage du groupe formé par les savons, les huiles, les cires et les silicones,
B) 0,1 à 15% en poids de talc,
C) 0,05 à 10% en poids de silice,
D) 0,1 à 5% en poids de catalyseurs,
E) 0,1 à 5% en poids de stabilisateurs de mousse,
F) ad 100% en poids de solvant.

4. Dispersions selon au moins l'une quelconque des revendications 1 à 3, **caractérisées**
**en ce qu'**on utilise comme talc B) des minéraux inorganiques de la famille des silicates à couches.

5. Dispersions selon au moins l'une quelconque des revendications 1 à 4, **caractérisées**
**en ce qu'**on utilise comme talc B) un talc présentant une composition de 35 à 70% en poids de SiO₂, 5 à 40% en poids de MgO, 5 à 20% en poids d'Al₂O₃ et 1 à 5% en poids de Fe₂O₃.

6. Dispersions selon la revendication 3, **caractérisées en ce qu'**on utilise comme silice C) de la silice pyrogène avec une teneur en SiO₂ > 99% par rapport à la substance calcinée pendant 2 heures à 1000°C.

7. Utilisation des dispersions d'agent de démoulage selon les revendications 1 à 6 pour la réalisation de corps façonnés en polyuréthane.

8. Utilisation des dispersions d'agent de démoulage selon les revendications 1 à 6 pour améliorer l'aptitude au garnissage des corps façonnés en polyuréthane réalisés avec celles-ci.
